# EUROPEAN PATENT SPECIFICATION

(11) **EP 3 276 180 B1**
(45) Date of publication and mention of the grant of the patent: **13.01.2021**
(21) Application number: 16768797.9
(22) Date of filing: 23.03.2016
(51) Int. Cl.: F04D 29/041, B01D 61/10, F04D 1/08, F04D 15/00, F04D 29/60, F04D 1/06

(54) **PUMP**
PUMPE
POMPE

(30) Priority: 24.03.2015 JP 2015061256
(43) Date of publication of application: 31.01.2018
(73) Proprietor: Ebara Corporation, Ohta-ku Tokyo 144-8510 (JP)
(72) Inventor: HOSODA, Norihiko, Tokyo 144-8510 (JP); OTAKE, Akiko, Tokyo 144-8510 (JP); MORI, Kuniyasu, Tokyo 144-8510 (JP); YOKOTA, Mitsuo, Tokyo 144-8510 (JP)
(74) Representative: Emde, Eric
(86) International application number: PCT/JP2016/059121
(87) International publication number: WO 2016/152894

(56) References cited:
- CN-U- 201 858 161
- GB-A- 967 971
- JP-A- H10 288 184
- JP-A- 2001 140 604
- JP-A- 2008 215 307
- JP-A- 2011 074 785
- JP-A- 2013 011 241
- JP-U- S4 925 003

## Description

### TECHNICAL FIELD

The present invention relates to a pump.

### BACKGROUND ART

A multistage pump, which is one form of a pump, has a plurality of impellers fixed on a rotating shaft. A liquid is introduced into a pump casing from a suction port of the multistage pump. The liquid introduced in the pump casing is sequentially pressurized by the impellers and discharged from a discharge port. Multistage pumps are used for transferring a variety of liquids, such as fresh water and sea water, and are used in various sites.

Axial thrust acts on the rotating shaft of a multistage pump from the discharge side to the suction side due to the pressure difference between the suction side and the discharge side of the rotating impellers. Therefore, the multistage pump is provided with a balance mechanism that produces balance thrust in the opposite direction to the axial thrust in order to balance the axial thrust and the balance thrust.

The balance mechanism includes a balance disk mounted on the rotating shaft, and a balance seat attached to the pump casing and facing the balance disk. A balance space accommodating the balance disk and the balance seat is in communication with a space on the fluid suction side of the pump casing by a balance pipe.

By providing the balancing function, the balance thrust in the opposite direction to the axial thrust acts on the balance disk. As a result, the axial thrust and the balance thrust are balanced, and the axial thrust is canceled out. JP 2000-130400 A discloses a multistage pump provided with such a balance mechanism.

### SUMMARY OF INVENTION

### TECHNICAL PROBLEM

However, the prior art does not consider realizing a pump with a simple structure capable of suppressing contact between the balance disk and the balance seat.

In other words, even if multistage-pump facilities are stopped at night and when on holidays, conventional multistage pumps are not stopped and are kept operating in order to avoid pressure fluctuation at the time of start and stop. However, in recent years, from the energy saving point of view, the multistage pumps are stopped at an increasing number of sites.

Here, there is a case where a device that is incapable of coping with a sudden pressure change is connected to the discharge side of a multistage pump. In this case, in order to avoid a sudden discharge-pressure increase at startup, water is flowed into the multistage pump by another pump while the multistage pump is stopped, and the discharge pressure is gradually increased by accelerating the speed slowly by an inverter etc. at the time of starting the multistage pump.

If water is flowed while the multistage pump is stopped, since the balance pipe has a simple shape, the pressure on the suction side is applied to the balance disk through the balance pipe without substantially no conduit resistance. This pressure acts on the balance disk as the pressure in the same direction as the axial thrust.

On the other hand, in the multistage pump being stopped, the complex shape of the impellers of multiple stages provides a conduit resistance. Therefore, the pressure on the suction side is reduced by the conduit resistance of multiple stages of impellers and applied to the balance disk. This pressure acts on the balance disk as the pressure in the same direction as the balance thrust. Consequently, a larger pressure in the axial thrust direction than the pressure in the balance thrust direction is applied to the balance disk. As a result, the balance disk is pushed toward the balance seat, and the balance disk and the balance seat may come into contact with each other.

If the multistage pump is started in a state in which the balance disk and the balance seat are in contact with each other, the balance disk and the balance seat may be in contact for a long time until the discharge pressure is stabilized, and the contact portions may be damaged.

On the other hand, JPS 62 148797U discloses an idea for avoiding contact between the balance disk and the balance seat of a multistage pump, wherein a pressure switch is installed in a discharge line of the multistage pump, and an electromagnetic valve is installed in a balance pipe. JPS 62 148797U controls the electromagnetic valve to be opened when the discharge pressure of the multistage pump becomes higher than the suction pressure by a set value or more, and controls the electromagnetic valve to be closed when the discharge pressure becomes lower than the set value at the time the pump is stopped. Since the technique disclosed therein uses the pressure switch and the electromagnetic valve, electrical wiring work is required and the device configuration is complicated. Moreover, there are possibilities that an electromagnetic coil is burned out, and that the size and cost of the electromagnetic valve main body are increased depending on the specification of liquid.

JP 2011-294375 A discloses a technique that provides a plurality of grooves in a balance disk in order to prevent the balance disk and a stationary member on the pump casing side from being damaged by unstable pump pressure at the time of starting the pump and so on. However, this technique makes the processing of the balance disk complicated. Furthermore, JP S49-25003 U discloses a mechanism for automatically adjusting a discharge side ground pressure of a multistage pump.
Moreover, GB 967 971 A discloses impeller pumps suitable for feeding water at high pressure to boilers. To avoid overheating of the feed pump when the boiler water demand falls to zero, a leak-off valve at the pump discharge is opened and a proportion of the normal pump flow to a de-aerator is returned. The opening of the leak-off valve is initiated by a signal from a venturi flow meter in the boiler feed line or by an emergency signal, in the case of failure of the flow meter signal, by a temperature sensitive element, consequent upon temperature rise of the feed pump at zero boiler flow.
Finally, CN 201 858 161 U relates to a horizontal axial suction sectional multistage highpressure centrifugal pump, which comprises a pump shell component, a rotor component, a bearing component and a sealing cover.

It is therefore an objective of the present invention to realize a pump with a simple structure capable of suppressing contact between a balance disk and a balance seat.

### SOLUTION TO PROBLEM

In accordance with the present invention, a pump as set forth in claim 1 is provided. Further embodiments of the invention are inter alia disclosed in the dependent claims. A pump of one embodiment includes: a rotating shaft; an impeller mounted on the rotating shaft; a balance mechanism for balancing axial thrust acting on the rotating shaft; a pump casing accommodating the impeller and the balance mechanism; a balance pipe for allowing communication between a balance space in the pump casing where the balance mechanism is accommodated and a space on a fluid suction side of the pump casing; and a check valve provided in the balance pipe to allow fluid to flow through the check valve in only a direction from the balance space toward the space on the fluid suction side; and a safety valve provided between the balance space and the check valve and configured to open to release a fluid having a pressure equal to or higher than a set value to outside.

In the pump of one embodiment, the balance mechanism may include a balance disk mounted on the rotating shaft, and a balance seat attached to the pump casing and facing the balance disk.

In the pump of one embodiment, the pump may be a pump capable of being driven so that a rotational speed of the rotating shaft is gradually increased by an inverter when starting the pump.

In the pump of one embodiment, the pump may be a pump for pressure-feeding a fluid to flow through a reverse osmosis membrane provided on the discharge side of the pump.

### BRIEF DESCRIPTION OF DRAWINGS

[Fig. 1A] Fig. 1A is a side view of a multistage pump of one embodiment.
[Fig. 1B] Fig. 1B is a view of the multistage pump of one embodiment as seen from a direction indicated by an arrow A in Fig. 1A.
[Fig. 1C] Fig. 1C is a view of the multistage pump of one embodiment as seen from a direction indicated by an arrow B in Fig. 1A.
[Fig. 2] Fig. 2 is a cross-sectional view of the multistage pump of one embodiment.
[Fig. 3] Fig. 3 is a cross-sectional view of a multistage pump of one embodiment.

### DESCRIOPTION OF ENBODIMENTS

The following will describe a pump of an embodiment of the present invention with reference to the drawings.

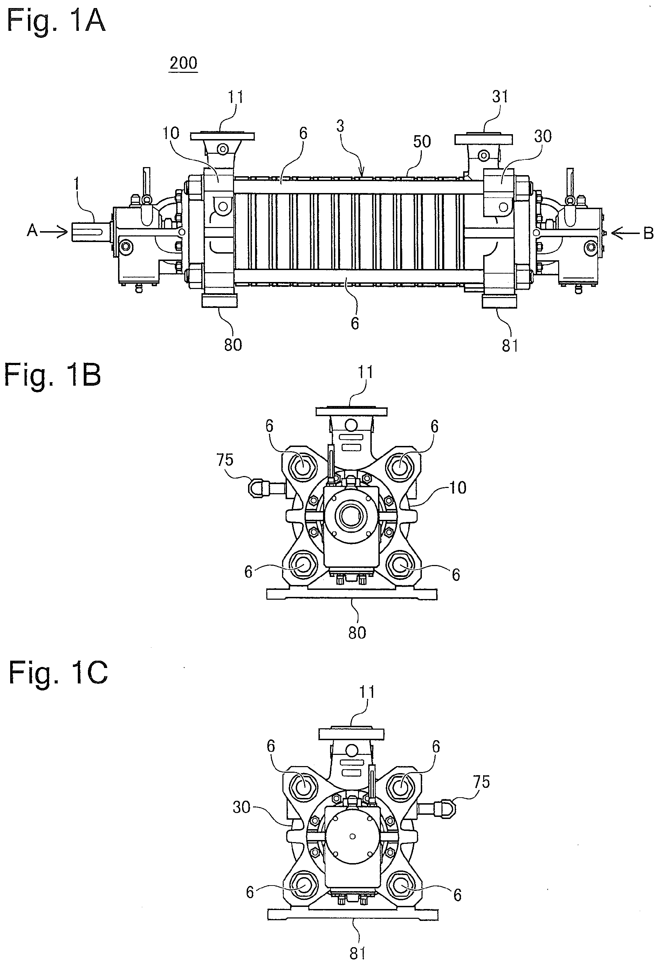

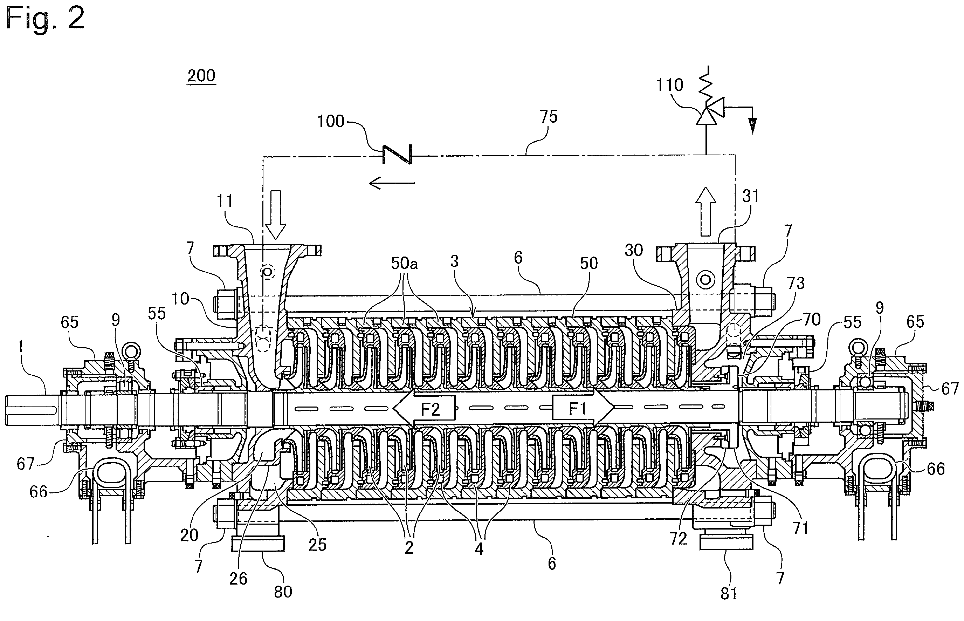

Fig. 1A is a side view of a multistage pump of one embodiment. Fig. 1B is a view of the multistage pump of one embodiment as seen from the direction indicated by the arrow A in Fig. 1A. Fig. 1C is a view of the multistage pump of one embodiment as seen from the direction indicated by the arrow B in Fig. 1A. Fig. 2 is a cross-sectional view of the multistage pump of one embodiment.

The multistage pump of this embodiment may be used, for example, as a pump for pressure-feeding a fluid (seawater) to flow through a reverse osmosis (RO) membrane provided on the discharge side of the multistage pump in a seawater desalination system, but is not limited to this usage. In this embodiment, a multistage pump including a plurality of impellers is described as an example, but the present invention is not limited to this.

A multistage pump 200 includes a rotating shaft 1 extending in a predetermined direction, a plurality of impellers 2 fixed on the rotating shaft 1, and a pump casing 3 accommodating the impellers 2. The rotating shaft 1 is rotatably supported by a bearing 9. One end of the rotating shaft 1 is connected to a driving source such as a motor. The rotating shaft 1 and the impellers 2 are driven rotationally by the driving source.

The pump casing 3 includes a suction casing 10 in which a suction port 11 is formed, a discharge casing 30 in which a discharge port 31 is formed, and an intermediate casing 50 placed between the suction casing 10 and the discharge casing 30. A leg part 80 is mounted on the suction casing 10. A leg part 81 is mounted on the discharge casing 30.

The intermediate casing 50 has a structure in which a plurality of annular casing pieces 50a are stacked in the axial direction. A guide vane 4 is arranged on the outside of each impeller 2 in a radial direction. One set of the impeller 2 and guide vane 4 are placed in each casing piece 50a. The suction casing 10, the intermediate casing 50 and the discharge casing 30 are fastened to each other with through bolts 6 and nuts 7.

The suction casing 10 and the discharge casing 30 are detachably attached to the intermediate casing 50. In other words, it is possible to separate the suction casing 10 and the discharge casing 30 from the intermediate casing 50 by removing the through bolts 6 and the nuts 7.

The multistage pump 200 allows a change in the number of stages of the impellers 2. In the case when the number of stages of the impellers 2 is to be increased, a desired number of impellers and the guide vanes and casing pieces corresponding to these impellers are added to the multistage pump 200. On the other hand, in the case when the number of stages of the impellers 2 is to be decreased, a desired number of impellers and the guide vanes and casing pieces corresponding to these impellers are removed from the multistage pump 200. Thus, the multistage pump 200 may have a desired number of stages according to the application.

The rotating shaft 1 extends through the suction casing 10 and the discharge casing 30. Each section of the suction casing 10 and the discharge casing 30 where the rotating shaft 1 pierces through is provided with a shaft sealing mechanism 55. For example, a mechanical seal or gland packing is used for the shaft sealing mechanism 55. Each bearing 9 is housed in a bearing casing 65. A bearing cover 67 is fixed to each bearing casing 65 with a bolt. Lubricating oil is filled in each bearing casing 65. This lubricating oil is cooled by a cooling pipe 66. Note that the cooling pipe 66 may not be provided.

Formed in the suction casing 10 are a suction volute 20 connected to the suction port 11, and a side chamber 25 adjacent to the first-stage impeller among the multiple stages of impellers 2. A part of liquid whose pressure is increased by the first-stage impeller flows into the side chamber 25. The suction volute 20 and the side chamber 25 are separated by a partition wall 26.

The multistage pump 200 has a balance mechanism 70. The balance mechanism 70 is placed in the balance space 73 inside the discharge casing 30. The balance mechanism 70 includes a balance disk 71 which is mounted on the rotating shaft 1 and rotates integrally with the rotating shaft 1. The balance mechanism 70 also includes a balance seat 72 which is mounted on the discharge casing 30 and arranged to face the liquid inflow side of the balance disk 71.

The balance mechanism 70 has the function of balancing the thrust force acting on the rotating shaft 1 by supporting the thrust force produced due to the pressure difference between the suction side and the discharge side of the impellers 2. The liquid whose pressure is increased by the impellers 2 passes through a minute gap between the balance disk 71 and the balance seat 72 and flows into the balance space 73. The multistage pump 200 of this embodiment is explained by describing the balance mechanism 70 including the balance disk 71 and the balance seat 72 as an example, but the present invention is not limited to this. The present invention is applicable to a pump equipped with other well-known balance mechanism that balances axial thrust and balance thrust by producing balance thrust in the opposite direction to the axial thrust of the rotating shaft.

The multistage pump 200 includes a balance pipe 75. The balance pipe 75 allows communication between the balance space 73 and the space inside the suction casing 10. The space in the suction casing 10 is, for example, the suction port 11, the suction volute 20, or the side chamber 25. The multistage pump 200 of this embodiment does not employ an external balance system that returns the fluid in the balance space 73 to a part other than the multistage pump 200, such as a deaerator, for example, but employs a self-balance system that returns the fluid in the balance space 73 to the multistage pump 200.

The multistage pump 200 includes a check valve 100 provided in the balance pipe 75. The check valve 100 is a valve that allows the fluid to flow through the valve in only a direction from the balance space 73 to the space on the fluid suction side. In other words, the check valve 100 is a valve that allows the fluid in the balance pipe 75 to flow in only a direction from the balance space 73 to the space in the suction casing 10.

The pressure loss at the check valve 100 causes an increase in the pressure in the balance space 73. The pressure increase in the balance space 73 decreases the distance between the balance disk 71 and the balance seat 72, and may cause contact between the balance disk 71 and the balance seat 72. Therefore, a valve that provides no resistance to the pressure and flow rate in the balance space 73 during operation of the multistage pump 200 is selected for the check valve 100.

According to the multistage pump 200 of this embodiment, it is possible to realize a simple structure capable of suppressing contact between the balance disk 71 and the balance seat 72. Specifically, in the case where water is flowed in the multistage pump 200 by another pump or the like while the multistage pump 200 is stopped, the pressure on the suction side is reduced by the conduit resistance of the multiple stages of impellers 2 when the water flows in the multistage pump 200, and the reduced pressure is applied to the balance space 73. On the other hand, focusing on the flow of fluid through the balance pipe 75, since the multistage pump 200 of this embodiment is provided with the check valve 100, the fluid is prevented from flowing from the space in the suction casing 10 into the balance space 73 through the balance pipe 75. As a result, only the thrust in the F1 direction is applied to the balance disk 71, and thus it is possible to prevent contact between the opposing surfaces of the balance disk 71 and balance seat 72.

Further, the multistage pump 200 of this embodiment may be driven so that the rotational speed gradually increases and the discharge pressure rises gradually by using an inverter etc. when starting the multistage pump 200. In this case, in a period in which the output frequency of the inverter is low and the pressure in the discharge port 31 is low, since the pressure in the balance space 73 is lower than the pressure in the space in the suction casing 10, the check valve 100 remains closed. Consequently, the movement of fluid between the balance space 73 and the space in the suction casing 10 through the balance pipe 75 is restricted. While the check valve 100 is closed, only thrust in the F1 direction is applied to the balance disk 71 without thrust in the F2 direction. Therefore, it is possible to suppress contact between the opposing surfaces of the rotating balance disk 71 and the stationary balance seat 72.

When the multistage pump 200 is operated by a rated operation and the discharge pressure is stabilized, the pressure on the discharge side rises and the pressure in the balance space 73 becomes higher than that in the space in the suction casing 10. Consequently, the check valve 100 is opened, and the balance space 73 and the space in the suction casing 10 become in communication through the balance pipe 75. As a result, the pressure in the balance space 73 and the pressure in the space in the suction casing 10 become substantially the same, thereby balancing the rotating shaft 1.

Moreover, the multistage pump 200 of this embodiment has a safety valve 110 that releases fluid to the outside when the pressure of the fluid becomes equal to or higher than a set value. The safety valve 110 is provided between the balance space 73 and the check valve 100. More specifically, the safety valve 110 is provided between the balance space 73 of the balance pipe 75 and the check valve 100.

Therefore, according to this embodiment, it is possible to suppress contact between the balance disk 71 and the balance seat 72 due to an increase in the pressure in the balance space 73. Specifically, when the valve body of the check valve 100 becomes inoperative on the closed side while the multistage pump 200 is in operation, the pressure in the balance space 73 increases, and the balance disk 71 and the balance seat 72 may come into contact with each other. In this case, there is a risk that the rotating shaft 1 becomes unable to rotate, and the electric motor which drives the multistage pump 200 is stopped due to overcurrent. On the other hand, the multistage pump 200 of this embodiment has the safety valve 110 provided between the balance space 73 and the check valve 100 in order to avoid an increase in pressure in the balance space 73. Therefore, even if the valve body of the check valve 100 becomes inoperative on the closed side while the multistage pump 200 is in operation, it is possible to release fluid out of the balance pipe 75 when the pressure of the fluid becomes equal to or higher than the set value. As a result, according to this embodiment, it is possible to suppress contact between the balance disk 71 and the balance seat 72 due to an increase in pressure in the balance space 73.

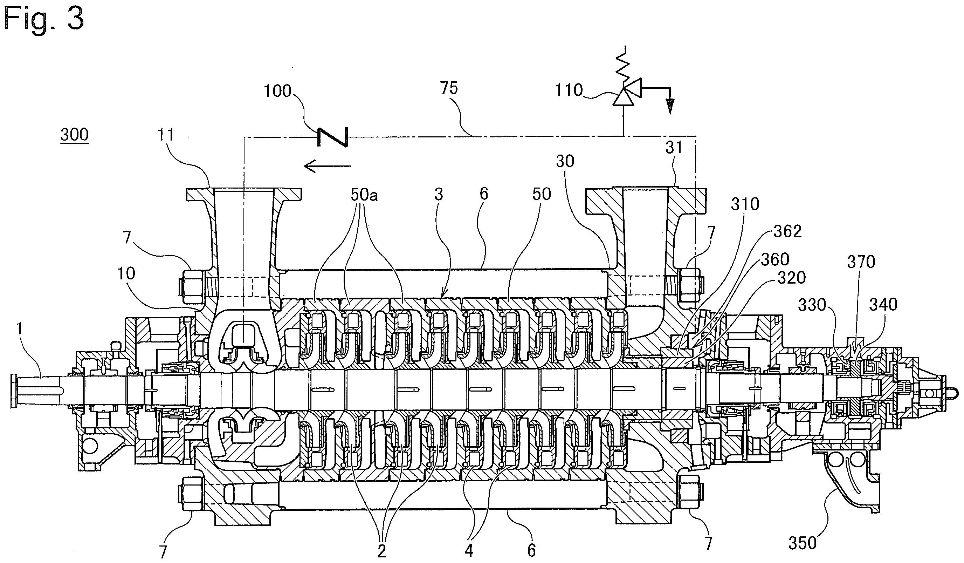

The embodiment of Fig. 2 is explained by describing the multistage pump 200 having the balance mechanism 70 including the balance disk 71 and the balance seat 72 as an example, but the present invention is not limited to this. Fig. 3 is a cross-sectional view of a multistage pump of one embodiment. A multistage pump 300 shown in Fig. 3 has a balance mechanism with a balance piston. In the multistage pump 300 of Fig. 3, parts having functions similar to those of the multistage pump 200 of Fig. 2 are denoted with the same reference numerals as in Fig. 2, and explanations thereof are omitted.

The multistage pump 300 has a balance mechanism 360. The balance mechanism 360 is placed in a balance space 362 inside a discharge casing 30. The balance mechanism 360 includes a balance piston 320 which is mounted on the rotating shaft 1 and rotates integrally with the rotating shaft 1. The balance mechanism 360 also includes a balance bushing 310 which is attached to the discharge casing 30 and arranged to face the outer peripheral surface of the balance piston 320.

The balance mechanism 360 has the function of balancing the thrust force acting on the rotating shaft 1 by supporting the thrust force produced due to the difference in pressure between the suction side and the discharge side of the impellers 2. The liquid pressurized by the impellers 2 passes through a minute gap between the balance piston 320 and the balance bushing 310 and flows into the balance space 362.

Further, the multistage pump 300 has a slide bearing 370 that rotatably supports the rotating shaft 1. The slide bearing 370 includes a thrust disk 340 mounted on the rotating shaft 1 and rotating integrally with the rotating shaft 1, and a thrust seat 330 placed to face the liquid inflow side of the thrust disk 340. While the multistage pump 300 is in operation, oil is supplied to the slide bearing 370 through an oil supply port 350. The slide bearing 370 supports the thrust force acting on the rotating shaft 1 by contact between the thrust disk 340 and the thrust seat 330 while the multistage pump 300 is in operation.

According to the multistage pump 300 of this embodiment, it is possible to realize a simple structure capable of suppressing contact between the thrust disk 340 and the thrust seat 330. In other words, in the case where water is flowed inside the multistage pump 300 by another pump while the multistage pump 300 is stopped, the pressure on the suction side is reduced by the conduit resistance of multiple stages of impellers 2 when the water flows inside the multistage pump 300, and the reduced pressure is applied to the surface on one side of the balance piston 320. On the other hand, focusing on the flow of fluid through the balance pipe 75, if the check valve 100 is not provided, the pressure on the suction side is applied to the other surface of the balance piston 320 through the balance pipe without substantially no conduit resistance because of the simple shape of the balance pipe 75. Consequently, the balance piston 320 and the rotating shaft 1 are pushed in the same direction as the axial thrust due to the difference in pressure applied to the balance piston 320. As a result, in the slide bearing 370, the thrust disk 340 is pushed toward the thrust seat 330, and there is a risk that the thrust disk 340 and the thrust seat 330 may come into contact with each other. For instance, there is a case where sufficient oil is not supplied to the slide bearing 370 at the time of starting the multistage pump 300. In this case, if the multistage pump 300 is started while the thrust disk 340 and the thrust seat 330 are in contact with each other, there is a risk of seizure of the thrust disk 340 and the thrust seat 330 due to inadequate formation of an oil film on the slide bearing 370.

On the other hand, since the multistage pump 300 of this embodiment is provided with the check valve 100, the flow of fluid from the space in the suction casing 10 to the balance space 362 through the balance pipe 75 is prevented. Consequently, only thrust in the direction opposite to the axial thrust is applied to the balance piston 320 and the rotating shaft 1. As a result, since it is possible to prevent contact between the thrust disk 340 and the thrust seat 330, seizure of the thrust disk 340 and the thrust seat 330 is avoided.

The above embodiments are described for the purpose of enabling persons who have common knowledge in the technical field to which the present invention pertains to carry out the present invention. It is obvious that various modifications of the above-described embodiments can be made by those skilled in the art, and the technical idea of the present invention can be applied to other embodiments. Therefore, the present invention is not limited to the embodiments described, but should rather be interpreted within the broadest scope as defined by the claims.

### REFERENCE SIGNS LIST

- 1: Rotating shaft
- 2: Impeller
- 3: Pump casing
- 10: Suction casing
- 11: Suction port
- 20: Suction volute
- 25: Side chamber
- 30: Discharge casing
- 31: Discharge port
- 50: Intermediate casing
- 70, 360: Balance mechanism
- 71: Balance disk
- 72: Balance seat
- 73, 362: Balance space
- 75: Balance pipe
- 100: Check valve
- 110: Safety valve
- 200, 300: Multistage pump
- 310: Balance bushing
- 320: Balance piston

## Claims

1. A pump (200; 300) comprising:
a rotating shaft (1);
an impeller (2) mounted on the rotating shaft (1);
a balance mechanism (70; 360) configured to balance axial thrust acting on the rotating shaft (1);
a pump casing (3) configured to accommodate the impeller (2) and the balance mechanism (70; 360);
a balance pipe (75) configured to allow communication between a balance space (73; 362) in the pump casing (3) and a space on a fluid suction side of the pump casing (3);
a check valve (100) provided in the balance pipe (75) and configured to allow fluid to flow through the check valve (100) only in a direction from the balance space (73; 362) towards the space on the fluid suction side; **characterised by**
a safety valve (110), provided between the balance space (73; 362) and the check valve (100) and configured to open to release a fluid outwards when a pressure of the fluid in the balance space (73; 362) is equal to or higher than a set value.

2. The pump (200) of claim 1, wherein the balance mechanism (70) includes:
a balance disk (71) mounted on the rotating shaft (1), and
a balance seat (72) attached to the pump casing (3) and facing the balance disk (71).

3. The pump (200; 300) of claims 1 or 2, wherein the pump (200; 300) is a pump capable of being driven so that a rotational speed of the rotating shaft (1) is gradually increased by an inverter when starting the pump (200; 300).

4. The pump (200; 300) of any one of the preceding claim, wherein the pump (200; 300) is a pump for pressure-feeding a fluid to flow through a reverse osmosis membrane provided on a discharge side of the pump.

## Patentansprüche

1. Eine Pumpe (200; 300), die Folgendes aufweist:
eine drehende Welle (1);
einen Impeller bzw. ein Antriebsrad (2), das auf der drehenden Welle (1) angebracht ist;
einen Ausgleichsmechanismus (70; 360), der eingerichtet ist, auf die drehende Welle (1) wirkenden Axialschub auszugleichen;
ein Pumpengehäuse (3), das eingerichtet ist, das Antriebsrad (2) und den Ausgleichsmechanismus (70; 360) aufzunehmen;
ein Ausgleichsrohr (75), das eingerichtet ist, Kommunikation bzw. Verbindung zwischen einem Ausgleichsraum (73; 362) in dem Pumpengehäuse (3) und einem Raum auf einer Fluid-Ansaugseite des Pumpengehäuses (3) zu ermöglichen;
ein Rückschlagventil (100), das in dem Ausgleichsrohr (75) vorgesehen und eingerichtet ist, es zu gestatten, dass Fluid durch das Rückschlagventil (100) nur in eine Richtung von dem Ausgleichsraum (73; 362) zu dem Raum auf der Fluid-Ansaugseite bzw. ihr entgegen strömt;
**gekennzeichnet durch**
ein Sicherheitsventil (110), das zwischen dem Ausgleichsraum (73; 362) und dem Rückschlagventil (100) vorgesehen und eingerichtet ist, sich zu öffnen, um ein Fluid nach außen abzugeben, wenn ein Druck des Fluids im Ausgleichsraum (73; 362) gleich oder höher als ein eingestellter Wert ist.

2. Die Pumpe (200) nach Anspruch 1, wobei der Ausgleichsmechanismus (70) Folgendes aufweist:
eine Ausgleichsscheibe (71), die auf der drehenden Welle (1) angebracht ist, und
eine Ausgleichsaufnahme (72), die am Pumpengehäuse (3) angebracht und der Ausgleichsscheibe (71) zugewandt ist.

3. Die Pumpe (200; 300) nach Anspruch 1 oder 2, wobei die Pumpe (200; 300) eine Pumpe ist, die geeignet ist, derart angetrieben zu werden, dass eine Drehgeschwindigkeit der drehenden Welle (1) beim Starten der Pumpe (200; 300) durch einen Inverter graduell bzw. stufenweise erhöht wird.

4. Die Pumpe (200; 300) nach einem der vorhergehenden Ansprüche, wobei die Pumpe (200; 300) eine Pumpe zum Druckeinspeisen eines Fluids ist, um durch eine Umkehrosmosemembran zu fließen, die auf einer Auslassseite der Pumpe vorgesehen ist.

## Revendications

1. Pompe (200 ; 300) comprenant :
un arbre tournant (1) ;
une turbine (2) montée sur l'arbre tournant (1) ;
un mécanisme d'équilibrage (70 ; 360) configuré pour équilibrer la poussée axiale agissant sur l'arbre tournant (1) ;
un carter de pompe (3) configuré pour recevoir la turbine (2) et le mécanisme d'équilibrage (70 ; 360) ;
un tuyau d'équilibrage (75) configuré pour permettre une communication entre un espace d'équilibrage (73 ; 362) dans le carter de pompe (3) et un espace sur un côté d'aspiration de fluide du carter de pompe (3) ;
un clapet anti-retour (100) prévu dans le tuyau d'équilibrage (75) et configuré pour permettre au fluide de s'écouler à travers le clapet anti-retour (100) uniquement dans une direction depuis l'espace d'équilibrage (73 ; 362) vers l'espace du côté d'aspiration de fluide ;
**caractérisé par**
une soupape de sécurité (110), prévue entre l'espace d'équilibrage (73 ; 362) et le clapet anti-retour (100) et configurée pour libérer un fluide vers l'extérieur lorsqu'une pression du fluide dans l'espace d'équilibrage (73 ; 362) est égale ou supérieure à une valeur fixée.

2. Pompe (200) selon la revendication 1, dans laquelle le mécanisme d'équilibrage (70) comporte :
un disque d'équilibrage (71) monté sur l'arbre tournant (1), et
un siège d'équilibrage (72) fixé au carter de pompe (3) et faisant face au disque d'équilibrage (71).

3. Pompe (200 ; 300) selon la revendication 1 ou 2, dans laquelle la pompe (200 ; 300) est une pompe capable d'être entraînée de sorte qu'une vitesse de rotation de l'arbre tournant (1) est progressivement augmentée par un inverseur au moment du démarrage de la pompe (200 ; 300).

4. Pompe (200 ; 300) selon l'une quelconque des revendications précédentes, dans laquelle la pompe (200 ; 300) est une pompe destinée à alimenter par pression constante un fluide pour qu'il s'écoule à travers une membrane d'osmose inverse prévue sur un côté refoulement de la pompe.
